# EUROPÄISCHE PATENTSCHRIFT

(11) **EP 3 894 208 B1**
(45) Veröffentlichungstag und Bekanntmachung des Hinweises auf die Patenterteilung: **24.07.2024**
(21) Anmeldenummer: 19808736.3
(22) Anmeldetag: 19.11.2019
(51) Int. Cl.: B32B 5/02, A47B 96/20, B32B 5/24, B32B 21/02, B32B 21/08, B32B 21/10, B32B 27/08, B32B 27/32, B32B 27/34, B32B 27/36

(54) **MEHRSCHICHTIGER VERBUNDKÖRPER**
MULTILAYER COMPOSITE
CORPS COMPOSITE MULTICOUCHE

(30) Priorität: 10.12.2018 DE 202018107020 U
(43) Veröffentlichungstag der Anmeldung: 20.10.2021
(73) Patentinhaber: REHAU Industries SE & Co. KG, 95111 Rehau (DE)
(72) Erfinder: BRENDEL, Tobias, 08527 Plauen (DE); ENGELBRECHT, Thorsten, 95502 Himmelkron (DE)
(86) Internationale Anmeldenummer: PCT/EP2019/081798
(87) Internationale Veröffentlichungsnummer: WO 2020/120080

(56) Entgegenhaltungen:
- EP-A1- 2 952 121
- WO-A1-2018/096213

## Beschreibung

Die Erfindung betrifft einen mehrschichtigen Verbundkörper mit
- einer Grundplatte, die vorzugsweise als HDF- oder MDF-Platte ausgebildet ist,
- einem auf die Grundplatte aufgebrachten, vorzugsweise wenigstens eine Schicht aufweisenden, polymeren Laminat,
- wenigstens einer Verbindungslage zwischen der Grundplatte sowie dem polymeren Laminat.

Derartige mehrschichtige Verbundkörper sind aus dem Stand der Technik bekannt. Ein mehrschichtiger Verbundkörper ist in der DE 20 2010 013 841 U1 beschrieben. Dieser mehrschichtige Verbundkörper betrifft eine Möbelbauplatte, wobei eine Oberseite eines Trägers aus einem Holz oder Holzersatzstoff mit einer klarsichtigen oder satinierten Kunststoffplatte verklebt ist, dass die Kunststoffplatte unterseitig mit einem farbigen Lack versehen ist, dass die Kunststoffplatte oberseitig mit einem kratzfesten Klarlack versehen ist und dass die Kanten der auf Maß geschnittenen Möbelbauplatte mit einer Kunststoffkante in einer Glasoptik belegt sind. Die Kunststoffplatte soll dabei aus einem Acryl oder aus einem Polycarbonat bestehen und eine Materialstärke von etwa 2 mm bis 4 mm aufweisen.

Nachteilig bei diesem mehrschichtigen Verbundkörper wird gesehen, dass die für eine stoffschlüssige Verbindung mit dem Träger aus einem Holz oder Holzersatzstoff absolut eben und plan herzustellen ist, was den Aufwand hierfür immens in die Höhe treibt.

Ein weiterer Nachteil dieses mehrschichtigen Verbundkörpers wird darin gesehen, dass bei dem Verkleben der rückseitig mit einem farbigen Lack versehenen Kunststoffplatte auf dem Träger die Lackschicht beschädigt bzw. zerstört wird, so dass die so hergestellte Möbelbauplatte nicht mehr verwendbar ist.

Weiterhin nachteilig wird gesehen, dass die Farbstabilität über lange Zeiträume nicht gewährleistet ist und dass dieser Verbundkörper insbesondere bei Beanspruchungen durch unterschiedliche Temperaturen frühzeitig versagt.

Ein weiterer mehrschichtiger Verbundkörper ist in der EP 2952121 A1 offenbart, mit einer Möbelplatte mit einer Grundplatte, die vorzugsweise als Holzspan- oder MDF- Platte ausgebildet ist, einem auf die Grundplatte aufgebrachten, vorzugsweise mehrere Schichten aufweisenden, polymeren Laminat, wobei zumindest die oberste, von der Grundplatte abgewandte Schicht des Laminats transparent oder transluzent ausgebildet ist, wobei das polymere Laminat mindestens eine von den Rändern der Grundplatte beabstandete Einfräsung aufweist, die zur optischen Gestaltung der Möbelplatte dient. Auf der von dem polymeren Laminat abgewandten Seite der Grundplatte ist ein sogenannter Gegenzug vorgesehen, welcher einen Verzug der Möbelplatte verhindert.

Ebenfalls nachteilig bei den mehrschichtigen Verbundkörpern aus dem Stand der Technik ist, dass diese insbesondere bei der bestimmungsgemäßen Verwendung von Trägerelement, welche als Röhren Spanplatte, Leichtbauplatte und dergleichen ausgebildet sind, dazu führen, dass die Oberfläche dieses mehrschichtigen Verbundkörpers unregelmäßig ist und insbesondere die erforderlichen Qualitäten hinsichtlich des Glanzgrades bzw. des Glanzschleiers nicht erreichbar sind.

Hier setzt die Erfindung ein, die sich die Aufgabe gestellt hat, die Nachteile des Standes der Technik zu überwinden und einen mehrschichtigen Verbundkörper aufzuzeigen, der einfach und kostengünstig herstellbar ist, der für den Einsatz insbesondere im Möbelbau mit verschiedenartigen Dekoren sowie in verschiedenen Glasoptiken und/oder Hochglanzoptiken zur Verfügung stellbar ist und der eine optimale Oberflächenqualität aufweist. Erfindungsgemäß wird diese Aufgabe durch die Merkmale des Anspruches 1 gelöst. Weitere vorteilhafte Ausgestaltungen sind in den Unteransprüchen beschrieben.

In dieser vorteilhaften Ausführung ist es somit erstmals möglich, einen mehrschichtiger Verbundkörper zur Verfügung zu stellen, der einfach und kostengünstig, sowohl im Verfahren mit stationären Taktpressen als auch in automatisierten Durchlaufverfahren, herstellbar ist, der insbesondere für den Einsatz im Möbelbau mit verschiedenartigen Dekoren sowie in unterschiedlichen Glasoptiken und/oder Hochglanzoptiken zur Verfügung stellbar ist und der überraschenderweise eine optimale Oberflächenqualität aufweist.

Der mehrschichtige Verbundkörper ist weiterhin so ausgebildet, dass das Distanzelement stoffschlüssige mit der Grundplatte verbunden ist. Hierdurch wird einerseits die Festigkeit bzw. die Steifigkeit des mehrschichtigen Verbundkörpers realisiert, während gleichzeitig insbesondere im Herstellungsverfahren die einzelnen unterschiedlichen Elemente des mehrschichtigen Verbundkörpers mit ihren materialbedingten Toleranzen in der Lage sind, die im Endprodukt erwünschte Oberflächenqualität zu realisieren.

Der mehrschichtige Verbundkörper zeichnet sich weiterhin dadurch aus, dass dessen Oberfläche aufweist:
a) einen Glanz von wenigstens 80, vorzugsweise wenigstens 85 GLE gemessen nach EN 13722 bei einem Messwinkel von 60°
b) einen Glanzschleier von maximal 50, vorzugsweise maximal 25 gemessen nach ISO 13803 bei einem Messwinkel von 60°.

Hierdurch ist es erstmals möglich, einen mehrschichtigen Verbundkörper zur Verfügung zu stellen, der nicht nur kostengünstig und wirtschaftlich herstellbar ist, sondern der eine äußerst anspruchsvolle glasähnliche und/oder hochglänzende Oberfläche aufweist. Weiterhin ist der mehrschichtige Verbundkörper vorteilhafterweise sowohl im Verfahren mit einer stationären Taktpresse als auch in einem automatisierten Durchlaufverfahren vorteilhafterweise herstellbar.

Es hat sich bei dem mehrschichtigen Verbundkörper herausgestellt, dass dessen Oberfläche aufweist:
a) einen long wave-Wert von maximal 3, vorzugsweise maximal 2,5 und
b) einen short wave-Wert von maximal 3, vorzugsweise maximal 2,5
somit ist überraschenderweise ein mehrschichtiger Verbundkörper kostengünstig und wirtschaftlich herstellbar, der zudem unabhängig vom Herstellungsprozess und den materialbedingten sowie fertigungsbedingten Toleranzen eine sehr anspruchsvolle, deutlich sichtbare Oberfläche aufweist.

Die Messung von long wave-Werten und short wave-werden kann dabei mit einem Verlaufsmessgerät wave-scan dual der Firma BYK ermittelt werden. In der Messung werden dabei zur Filterung fünf Wellenlängenbereiche Wa, Wb, Bc, Wd, und We, genannt der short wave-Wert und der long wave-Wert entsprechen dabei etwa den Bereichen Wb und We, d. h. Wellenlängen von etwa 0,2 bis etwa 1,5 mm für den short wave- Wert und etwa 1,0-3,5 mm für den long wave-Wert.

Die relevanten Parameter der Oberflächen des mehrschichtigen Verbundkörpers sind dabei an der Oberfläche des polymeren Laminats bzw. gegebenenfalls an der Oberfläche der auf dem polymeren Laminat aufgebrachten Deckschicht zu ermitteln.

Bei dem mehrschichtigen Verbundkörper konnte überraschend festgestellt werden, dass insbesondere der Glanz und der Glanzschleier (Haze) sehr relevant sind, insbesondere aber auch die weiteren Oberflächenparameter wie der sogenannte long wave-Wert und der short wave-Wert, welche wichtige Faktoren für die Beurteilung insbesondere der Oberfläche des mehrschichtigen Verbundkörpers sind.

Diese Parameter an sich, jedoch gerade in Kombination miteinander, für den mehrschichtigen Verbundkörper mit den jeweils überraschend gefundenen und definierten Wertebereichen liefern so ein besonders anspruchsvolles und ebenes Erscheinungsbild der Oberflächen des mehrschichtigen Verbundkörpers.

Das Distanzelement ist als Vlies ausgebildet ist und hat ein Flächengewicht von etwa 40 bis 150 g/m², vorzugsweise etwa 50 bis 150 g/m ² gemäß DIN EN 29073-1 aufweist. Insbesondere in dieser vorteilhaften Ausgestaltung des erfindungsgemäßen, mehrschichtigen Verbundkörpers ist das eingesetzte Distanzelement in der Lage, die im Herstellungsprozess entstehenden Spannungen und Beanspruchungen der einzelnen Elemente des mehrschichtigen Verbundkörpers, die aus den unterschiedlichen Werkstoffen resultieren, erfolgreich zu kompensieren, sodass der mehrschichtige Verbundkörper in der entsprechend geforderten Oberflächenqualität und Wirtschaftlichkeit zur Verfügung stellt weist.

In einer weiteren vorteilhaften Ausgestaltung des mehrschichtiger Verbundkörpers weist das Distanzelement eine Dicke von etwa 0,05 bis 2,0 mm, vorzugsweise 0,06 bis 1,5 mm nach DIN ISO 9073-2 auf. Durch diese Dimensionierung des Distanzelementes können mehrschichtige Verbundkörper zur Verfügung gestellt werden, die abhängig von ihrer Geometrie (Länge, Breite) sowie ihrer Dicke dennoch in einer vorteilhaften, optimalen Oberflächenqualität herstellbar sind.

Ein weiterer Vorteil des mehrschichtigen Verbundkörpers besteht darin, dass das Distanzelement aus einem polymeren Material ausgewählt ist aus der Gruppe der Polyester, wie Polyethylentherephthalat, wie Polybutylentherephthalat; der Polyolefine, wie Polypropylen, Polyethylen; der Polyamide; der Aramide sowie aus Mischungen dieser. Durch diese mögliche Variation der Materialien des Distanzelementes können wiederum mehrschichtige Verbundkörpers zur Verfügung gestellt werden, die sowohl wirtschaftlich als auch kostengünstig herstellbar sind und die die erforderliche Oberflächenqualität aufweisen.

Der mehrschichtige Verbundkörper ist dabei weiterhin so ausgebildet, dass das das polymere Material des Distanzelementes etwa 80 bis 95 % Polyester und etwa 5 bis 20 % Polypropylen aufweist. In dieser vorteilhaften Materialzusammensetzung des Distanzelementes sind überraschenderweise mehrschichtige Verbundkörper herstellbar, die eine absolut optimale Oberflächenqualität bei insbesondere einer äußerst wirtschaftlichen Fertigung aufweisen.

Ebenfalls vorteilhaft bei dem mehrschichtigen Verbundkörper ist, dass das Distanzelement als Nadelvliesstoff ausgebildet ist, bei dem die einzelnen Fasern durch ein mechanisches Verfestigungsverfahren miteinander verschlungen und/oder vermascht sind und eine Dehnung (links) von etwa 50 bis 70 % sowie eine Dehnung (quer) von etwa 50 bis 70 % gemäß DIN EN 29073 -3 aufweist. Hierdurch lassen sich mehrschichtige Verbundkörpers herstellen, die eine optimale Oberflächenqualität aufweisen, da das Distanzelement überraschenderweise in der Lage ist, Fertigung bedingte sowie materialbedingte Toleranzen der einzelnen Werkstoffe der Elemente des mehrschichtigen Verbundkörpers auszugleichen.

Weiterhin vorteilhaft bei dem mehrschichtigen Verbundkörper ist, dass das Distanzelement als Nassvliesstoff ausgebildet ist, bei dem die einzelnen Fasern durch ein Verfestigungsverfahren miteinander verschlungen sind und eine Dehnung (links) von etwa 5 bis 35 % sowie eine Dehnung (quer) von etwa 5bis 35 % gemäß DIN EN 29073 -3 aufweist.

Der mehrschichtige Verbundkörper ist vorteilhafterweise weiterhin so ausgebildet, dass die Grundplatte, das polymere Laminat, das Trägerelement sowie das Distanzelement über wenigstens eine Verbindungslage stoffschlüssig miteinander verbunden sind, wobei die Verbindungslage wenigstens einen reaktiven Schmelzkleber auf Basis von Polyurethan (PUR) mit einer Auftragsmenge von etwa 30 bis 150 g/m², vorzugsweise 40 bis 80 g/m² aufweist. Hierdurch sind die einzelnen Elemente des mehrschichtigen Verbundkörpers so flächenmäßig miteinander fixiert, dass es zu keinen Ablösungserscheinungen bzw. Beschädigungen führt.

In einer weiteren ebenfalls vorteilhaften Ausgestaltung des mehrschichtigen Verbundkörpers weist die obere Schicht des polymeren Laminates über ihre Dicke für sichtbares Licht einen Transmissionsgrad von mindestens 80 % gemessen nach ISO 13468-2 auf. Hierdurch sind mehrschichtige Verbundkörper herstellbar, die in verschiedenen, hochwertigen Glasoptiken und/oder Hochglanzoptiken sowie auch in einer äußerst anspruchsvollen Oberflächenqualität zur Verfügung stellbar sind.

Der mehrschichtige Verbundkörper ist weiterhin so ausgebildet, dass zumindest die obere, von der Grundplatte abgewandte Schicht des polymeren Laminates transparent oder transluzent ausgebildet ist. Hierdurch wird ebenfalls eine hochwertige Glasoptik und/oder Hochglanzoptik erzielt.

Dabei hat es sich weiterhin als vorteilhaft herausgestellt, dass die obere Schicht des polymeren Laminats wenigstens eine Deckschicht mit einer Dicke von etwa 2 bis 60 µm vorzugsweise 5 bis 30 µm aufweist. Diese Deckschicht des mehrschichtigen Verbundkörpers stellt einen zusätzlichen Schutz für die hochwertige Glasoptik in der anspruchsvollen Oberflächenqualität dar. Diese Deckschicht verleiht dem mehrschichtigen Verbundkörper eine erhöhte Kratzbeständigkeit gemäß DIN EN 15186 sowie eine hohe chemische Beständigkeit gemäß DIN 68861 Teil 1.

Die Verbindungslage zwischen dem Distanzelement und dem Trägerelement weist dabei wenigstens einen Dispersionsklebstoff auf Basis von PVAC auf mit einer Auftragsmenge von etwa 20 bis 300 g / m², vorzugsweise 80 bis 150 g / m² auf. Der mehrschichtige Verbundkörper in seinen komplexen Aufbau ist kostengünstig und wirtschaftlich herstellbar, vereint die Vorteile der einzelnen unterschiedlichen Elemente wie des Distanzelement ist, der Grundplatte sowie des Trägerelementes mit denen des polymeren Laminats und vermeidet die Nachteile des bekannten Standes der Technik.

Ein ebenfalls wichtiger Vorteil des mehrschichtigen Verbundkörpers besteht darin, dass das Trägerelement aus Holz, Holzwerkstoffen, Holzersatzstoffen, Röhrenspanplatte, Leichtbauplatte, HDF- oder MDF-Platte, polymeren Werkstoffen, metallischen Werkstoffen, keramischen Werkstoffen, Glas, Papier und dergleichen ausgebildet ist. Hierdurch sind mehrschichtige Verbundkörper mit unterschiedlichsten Eigenschaften kostengünstig herstellbar.

Zweckmäßigerweise besteht die obere Schicht und/oder die Schichten des polymeren Laminates aus PMMA (Polymethylmethacrylat) und/oder PC (Polycarbonat) und/oder SAN (Styrol- Acrylnitril); PET (Polyethylenterephthalat), PC/ABS (Polycarbonat/AcrylnitrilButadien-Styren), alternativ kann die obere Schicht auch aus einem Polyolefin bestehen. Vorteilhafterweise ist das polymere Laminat so ausgebildet, dass es eine Gesamtdicke von etwa 0,2 bis 4 mm, vorzugsweise 0,25 bis 2 mm aufweist.

Durch die Wahl der Werkstoffe für die die einzelnen Elemente des mehrschichtigen Verbundkörpers insbesondere das Distanzelement, das polymere Laminat, sowie die Grundplatte sowie der Begrenzung/ Dimensionierung insbesondere des Flächengewichtes des Vlieses gemäß DIN EN 29073-1 in Kombination mit der Dicke insbesondere des Distanzelement des gemäß DIN ISO 9073-2 ist es somit überraschend möglich, mehrschichtige Verbundkörper zur Verfügung zu stellen, die wirtschaftlich sowie kostengünstig herstellbar sind und die erstmals eine Kombination der Vorteile der unterschiedlichen Elemente des mehrschichtigen Verbundkörpers unter Ausschluss der Nachteile des Standes der Technik ermöglichen.

Der mehrschichtige Verbundkörper soll und anhand von Ausführungsbeispielen, welche die Erfindung nicht einschränken, näher beschrieben werden.

Es zeigt:
- Fig. 1: perspektivische Explosionsdarstellung eines mehrschichtigen Verbundkörpers
- Figur 2: perspektivische Darstellung eines weiteren, mehrschichtigen Verbundkörpers
- Figur 3: perspektivische Darstellung eines weiteren, mehrschichtigen Verbundkörpers

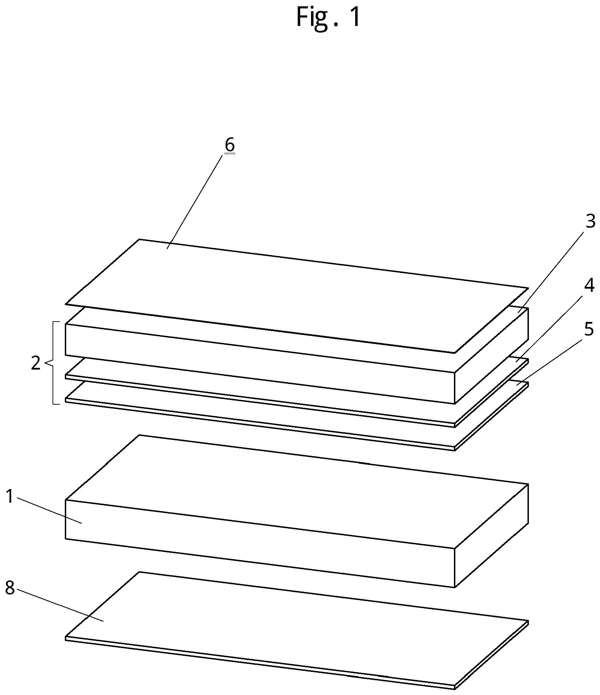

In der Fig. 1 ist der mehrschichtige Verbundkörper dargestellt, mit einer Grundplatte 1, die vorzugsweise als HDF-oder MDF-Platte ausgebildet ist, einem auf die Grundplatte 1 aufgebrachten, in diesem Ausführungsbeispiel drei Schichten 3,4, 5 aufweisenden, polymeren Laminat 2, wobei zumindest die obere, von der Grundplatte 1 abgewandte Schicht 3 des polymeren Laminats 2 Transparent oder transluzent ausgebildet ist.

Auf der oberen Schicht 3 des polymeren Laminates 2 ist die Deckschicht 6 angeordnet, welche in diesem Ausführungsbeispiel ebenfalls transparent bzw. transluzent ausgebildet ist. Die Deckschicht 6 wiest eine Dicke von etwa 10 µm auf.

Die Deckschicht 6 und/oder die obere Schicht 3 des polymeren Laminats 2 des mehrschichtigen Verbundkörpers zeichnen sich weiterhin dadurch aus, dass deren Oberflächen aufweisen:
a) einen Glanz von wenigstens 80, vorzugsweise wenigstens 85 GLE gemessen nach EN 13722 bei einem Messwinkel von 60°
b) einen Glanzschleier von maximal 50, vorzugsweise maximal 25 gemessen nach ISO 13803 bei einem Messwinkel von 60°.

In diesem Ausführungsbeispiel einen Glanz von etwa 86 GLE gemessen nach EN 13722 sowie einen Glanzschleier 42 Gemessen nach ISO 13803 beides bei einem Messwinkel von 60°.

Weiter sind die Deckschicht 6 und/oder die obere Schicht 3 des polymeren Laminats 2 des mehrschichtigen Verbundkörpers so ausgebildet, dass deren Oberflächen aufweisen:
a) einen long wave-Wert von maximal 3, vorzugsweise maximal 2,5 und
b) einen short wave-Wert von maximal 3, vorzugsweise maximal 2,5
in diesem Ausführungsbeispiel weisen die Deckschicht 6 und/oder die obere Schicht 3 des polymeren Laminats 2 einen long wave-Wert von 2 und einen short wave Wert von 1,8.

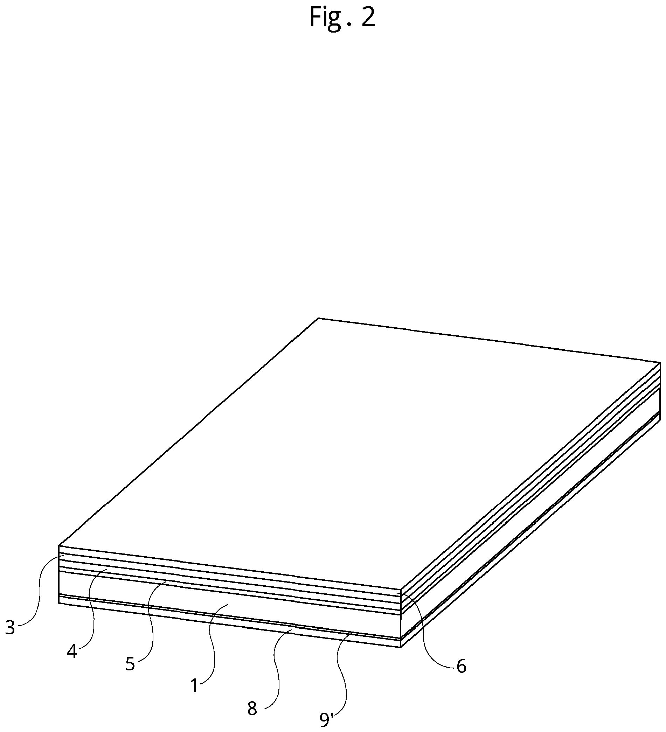

In der Figur 2 ist eine perspektivische Darstellung eines weiteren mehrschichtigen Verbundkörpers dargestellt.

Der mehrschichtige Verbundkörper mit einer Grundplatte 1, die als MDF-Platte ausgebildet ist, sowie einem auf die Grundplatte 1 aufgebrachten, insgesamt die Schichten 3, 4, 5, aufweisenden, polymeren Laminat 2 wobei zumindest die obere, von der Grundplatte 1 abgewandte Schicht 3 des polymeren Laminats 2 transluzent ausgebildet ist auf deren Oberfläche die Deckschicht 6 vollflächig angeordnet ist.

Die Deckschicht 6 des polymeren Laminats 2 des mehrschichtigen Verbundkörpers zeichnen sich weiterhin dadurch aus, dass deren Oberfläche aufweist:
a) einen Glanz von wenigstens 80, vorzugsweise wenigstens 85 GLE gemessen nach EN 13722 bei einem Messwinkel von 60°
b) einen Glanzschleier von maximal 50, vorzugsweise maximal 25 gemessen nach ISO 13803 bei einem Messwinkel von 60°.

In diesem Ausführungsbeispiel weist die Deckschicht 6 einen Glanz von etwa 88 GLE gemessen nach EN 13722 sowie einen Glanzschleier 10 Gemessen nach ISO 13803 beides bei einem Messwinkel von 60°.

Weiter ist die Deckschicht 6 des polymeren Laminats 2 des mehrschichtigen Verbundkörpers so ausgebildet, dass deren Oberfläche aufweist:
a) einen long wave-Wert von maximal 3, vorzugsweise maximal 2,5 und
b) einen short wave-Wert von maximal 3, vorzugsweise maximal 2,5

In diesem Ausführungsbeispiel weist die Deckschicht 6 einen long wave-Wert von 1,0 und einen short wave Wert von 1,6.

In diesem Ausführungsbeispiel ist das polymere Laminat 2 über eine nicht dargestellte Verbindungslage mit der Grundplatte 1 stoffschlüssig verbunden.

Das Distanzelement 8 ist in diesem Ausführungsbeispiel als Vlies ausgebildet und weist ein Flächengewicht von etwa 75 g/m² gemäß DIN EN 29073-1 auf. Weiterhin ist das Distanzelement 8 in diesem Ausführungsbeispiel so ausgebildet, dass es eine Dicke von etwa 0,75 mm nach DIN ISO 9073-2 aufweist.

Das Distanzelement 8 des mehrschichtigen Verbundkörpers ist in diesem Ausführungsbeispiel aus einem polymeren Material ausgewählt aus der Gruppe der Polyester, wie Polyethylenterephthalat und der Polyolefine, wie Polypropylen hergestellt.

In diesem Ausführungsbeispiel weist das polymere Material des Distanzelementes 8 etwa 80 bis 95 % Polyester, Polyethylentherephthalat und etwa 5 bis 20 % Polyolefinen, Polypropylen auf. Hierdurch ist das Distanzelement 8 des mehrschichtigen Verbundkörpers vorteilhafterweise eine flexible Entkopplungsschicht.

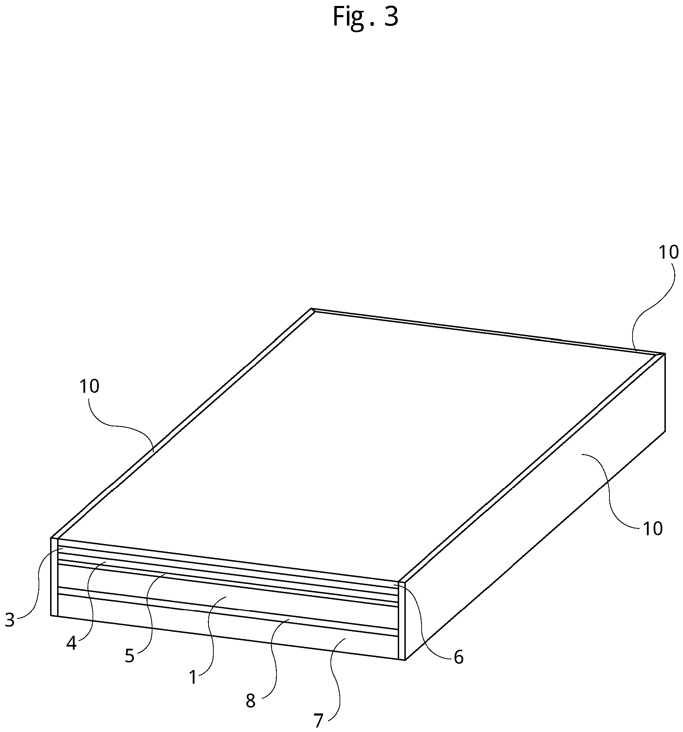

In der Figur 3 ist eine perspektivische Darstellung eines weiteren mehrschichtigen Verbundkörpers dargestellt.

Der mehrschichtige Verbundkörper mit einer Grundplatte 1, die als MDF-Platte ausgebildet ist, sowie einem auf die Grundplatte 1 aufgebrachten, insgesamt die Schichten 3, 4, 5, aufweisenden, polymeren Laminat 2 wobei zumindest die obere, von der Grundplatte 1 abgewandte Schicht 3 des polymeren Laminats 2 transluzent ausgebildet ist auf deren Oberfläche die Deckschicht 6 vollflächig angeordnet ist.

Die Deckschicht 6 des polymeren Laminats 2 des mehrschichtigen Verbundkörpers zeichnen sich weiterhin dadurch aus, dass deren Oberfläche aufweist:
a) einen Glanz von wenigstens 80, vorzugsweise wenigstens 85 GLE gemessen nach EN 13722 bei einem Messwinkel von 60°
b) einen Glanzschleier von maximal 50, vorzugsweise maximal 25 gemessen nach ISO 13803 bei einem Messwinkel von 60°.

In diesem Ausführungsbeispiel weist die Deckschicht 6 einen Glanz von etwa 88 GLE gemessen nach EN 13722 sowie einen Glanzschleier 10 Gemessen nach ISO 13803 beides bei einem Messwinkel von 60°.

Weiter ist die Deckschicht 6 des polymeren Laminats 2 des mehrschichtigen Verbundkörpers so ausgebildet, dass deren Oberfläche aufweist:
a) einen long wave-Wert von maximal 3, vorzugsweise maximal 2,5 und
b) einen short wave-Wert von maximal 3, vorzugsweise maximal 2,5

In diesem Ausführungsbeispiel weist die Deckschicht 6 einen long wave-Wert von 1,0 und einen short wave Wert von 1,6.

Der mehrschichtige Verbundkörper es weiterhin so ausgebildet, dass er ein Trägerelement 7 aufweist, welches in diesem Ausführungsbeispiel als MDF-Platte ausgebildet ist.

In diesem Ausführungsbeispiel ist das polymere Laminat 2 über eine nicht dargestellte Verbindungslage mit der Grundplatte 1 stoffschlüssig verbunden.

Der mehrschichtige Verbundkörper ist weiterhin so ausgebildet, dass die Grundplatte 1 an der, der unteren Schicht 4, 5 des polymeren Laminats 2 gegenüberliegenden angeordneten, Seite wenigstens teilweise über ein Distanzelement 8 von dem Trägerelement 7 beabstandet, über wenigstens eine nichtdargestellte weitere Verbindungslage miteinander verbunden, angeordnet ist.

Weiterhin ist das Distanzelement 8 stoffschlüssig mit der Grundplatte 1 und dem Trägerelement 7 verbunden.

Das Distanzelement 8 des mehrschichtigen Verbundkörpers ist in diesem Ausführungsbeispiel aus einem polymeren Material ausgewählt aus der Gruppe der Polyester, wie Polyethylenterephthalat und der Polyolefine, wie Polypropylen hergestellt.

In diesem Ausführungsbeispiel weist das polymere Material des Distanzelementes 8 etwa 80 bis 95 % Polyester, Polyethylentherephthalat und etwa 5 bis 20 % Polyolefinen, Polypropylen auf. Hierdurch ist das Distanzelement 8 des mehrschichtigen Verbundkörpers vorteilhafterweise eine flexible Entkopplungsschicht.

Weiterhin ist das Distanzelement 8 des mehrschichtigen Verbundkörpers als Nadelvliesstoff ausgebildet, bei dem die einzelnen Fasern durch ein mechanisches Verfestigungsverfahren miteinander verschlungen und/oder vermascht sind.

Das Distanzelement 8 des mehrschichtigen Verbundkörpers weist in diesem Ausführungsbeispiel eine Dehnung (längs) von etwa 60 % sowie eine Dehnung (quer) von etwa 60 % gemäß DIN EN 29073-3 auf.

Der mehrschichtige Verbundkörper ist in diesem Ausführungsbeispiel so ausgebildet, dass die Grundplatte 1, das polymere Laminat 2 und das Trägerelement 7 randseitig von jeweils einer Kantenleiste 10 abgedeckt sind, wobei die Kantenleiste 10 sowohl die Grundplatte 1 als auch das polymere Laminat 2 und das Trägerelement 7 stirnseitig vollflächig überdeckt. Bei bestimmungsgemäßer Verwendung des mehrschichtigen Verbundkörpers sind im Allgemeinen alle vier Stirnseiten mit jeweils einer Kantenleiste 10 vollflächig, abdichtend überdeckt.

Der erfindungsgemäße mehrschichtige Verbundkörper zeichnet sich weiterhin dadurch aus, dass durch die Dimensionierung des als Vlies ausgebildeten Distanzelementes 8 insbesondere hinsichtlich des Flächengewichtes gemäß DIN EN 29073-1 als auch der Dicke gemäß DIN ISO 9073-2 es möglich ist, dass der mehrschichtige Verbundkörper erstmals nicht nur wirtschaftlich und kostengünstig herstellbar, sondern auch nahezu verzugsfrei für den Einsatz bspw. in der Möbelindustrie zur Verfügung stellbar ist. Dabei ist eine industrielle Verarbeitbarkeit insbesondere dadurch gegeben, dass der mehrschichtige Verbundkörper als Platte in Größen von etwa 1300 mm x 2800 mm zur Verfügung stellbar ist.

## Patentansprüche

1. Mehrschichtiger Verbundkörper mit
- einer Grundplatte (1), die vorzugsweise als HDF- oder MDF-Platte ausgebildet ist,
- einem auf die Grundplatte (1) aufgebrachten, vorzugsweise wenigstens eine Schicht (3, 4, 5) aufweisenden, polymeren Laminat (2),
- wenigstens einer Verbindungslage (9) zwischen der Grundplatte (1) sowie dem polymeren Laminat (2),
- wobei die Grundplatte (1) an der, der unteren Schicht (4, 5) des polymeren Laminates (2) gegenüberliegenden angeordneten, Seite wenigstens teilweise ein Distanzelement (8) über wenigstens eine Verbindungslage (9) miteinander verbunden, aufweist, **dadurch gekennzeichnet, dass** das Distanzelement (8) als Vlies ausgebildet ist und ein Flächengewicht von etwa 40 bis 150 g/m², vorzugsweise etwa 50 bis 150 g/m² gemäß DIN EN 29073 -1 aufweist.

2. Mehrschichtiger Verbundkörper nach Anspruch 1, **dadurch gekennzeichnet, dass** das Distanzelement (8) stoffschlüssig mit der Grundplatte (1) verbunden ist.

3. Mehrschichtiger Verbundkörper nach einem der vorhergehenden Ansprüche, **dadurch gekennzeichnet, dass** dessen Oberfläche aufweist:
a) einen Glanz von wenigstens 80, vorzugsweise wenigstens 85 GLE gemessen nach EN 13722 bei einem Messwinkel von 60°
b) einen Glanzschleier von maximal 50, vorzugsweise maximal 25 gemessen nach ISO 13803 bei einem Messwinkel von 60°.

4. Mehrschichtiger Verbundkörper nach einem der vorhergehenden Ansprüche, **dadurch gekennzeichnet, dass** dessen Oberfläche aufweist:
a) einen long wave-Wert, gemessen wie in der Beschreibung beschrieben, von maximal 3, vorzugsweise maximal 2,5 und
b) einen short wave-Wert, gemessen wie in der Beschreibung beschrieben, von maximal 3, vorzugsweise maximal 2,5.

5. Mehrschichtiger Verbundkörper nach einem der vorhergehenden Ansprüche, **dadurch gekennzeichnet, dass** das Distanzelement (8) eine Dicke von etwa 0,05 bis 2,0 mm, vorzugsweise 0,06 bis 1,5 mm nach DIN ISO 9073 - 2 aufweist.

6. Mehrschichtiger Verbundkörper nach einem der vorhergehenden Ansprüche, **dadurch gekennzeichnet, dass** das Distanzelement (8) aus einem polymeren Material, ausgewählt ist aus der Gruppe der Polyester, wie Polyethylenterephthalat, wie Polybutylenterephthalat; der Polyolefine, wie Polypropylen, Polyethylen; der Polyamide; der Aramide sowie aus Mischungen dieser.

7. Mehrschichtiger Verbundkörper nach einem der vorhergehenden Ansprüche, **dadurch gekennzeichnet, dass** das Distanzelement (8) als Nadelvliesstoff ausgebildet ist, bei dem die einzelnen Fasern durch ein mechanisches Verfestigungsverfahren miteinander verschlungen und/oder vermascht sind und eine Dehnung (längs) von etwa 50-70 % sowie eine Dehnung (quer) von etwa 50-70 % gemäß DIN EN 29073 -3 aufweist.

8. Mehrschichtiger Verbundkörper nach einem der vorhergehenden Ansprüche, **dadurch gekennzeichnet, dass** das Distanzelement (8) als Nassvlies ausgebildet ist, bei dem die einzelnen Fasern durch ein Verfestigungsverfahren miteinander verschlungen sind und eine Dehnung (längs) von etwa 5 - 35 % sowie eine Dehnung (quer) von etwa 5 - 35 % gemäß DIN EN 29073 -3 aufweist.

9. Mehrschichtiger Verbundkörper nach einem der vorhergehenden Ansprüche, **dadurch gekennzeichnet, dass**
- die Grundplatte (1), das polymere Laminat (2), sowie das Distanzelement (8) über wenigstens eine Verbindungslage (9) stoffschlüssig miteinander verbunden sind,
- wobei die Verbindungslage (9) wenigstens einen reaktiven Schmelzkleber auf Basis von Polyurethan (PUR) mit einer Auftragsmenge von etwa 30 bis 150 g/m², vorzugsweise 40 bis 80 g/m² aufweist.

10. Mehrschichtiger Verbundkörper nach einem der vorhergehenden Ansprüche, **dadurch gekennzeichnet, dass** zumindest die obere, von der Grundplatte (1) abgewandte Schicht (3) des polymeren Laminates (2) transparent oder transluzent ausgebildet ist,

11. Mehrschichtiger Verbundkörper nach einem der vorhergehenden Ansprüche, **dadurch gekennzeichnet, dass** die obere Schicht (3) des polymeren Laminats (2) über ihre Dicke für sichtbares Licht einen Transmissionsgrad von mindestens 80 % gemessen nach ISO 13468-2 aufweist.

12. Mehrschichtiger Verbundkörper nach einem der vorhergehenden Ansprüche, **dadurch gekennzeichnet, dass** die obere Schicht (3) des polymeren Laminats (2) wenigstens eine Deckschicht (6) mit einer Dicke von etwa 2 bis 60 µm vorzugsweise 5 bis 30 µm aufweist.

13. Mehrschichtiger Verbundkörper nach einem der vorhergehenden Ansprüche, **dadurch gekennzeichnet, dass** die Grundplatte (1), das polymere Laminat (2) randseitig mit mindestens einer Kantenleiste (10) versehen sind, welche randseitig sowohl die Grundplatte (1) als auch das polymere Laminat (2) überdeckt.

## Claims

1. Multi-layer composite body, comprising
- a base panel (1), preferably in the form of a hard fiberboard or medium-density fiberboard,
- a polymeric laminate (2), preferably comprising at least one layer (3, 4, 5), applied to the base panel (1),
- at least one bonding layer (9) between the base panel (1) and the polymeric laminate (2),
- wherein the base panel (1) comprises, on the side facing away from the lower layer (4, 5) of the polimeric laminate (2), at least in part a spacer element (8) connected thereto via at least one bonding layer (9),
**characterized in that** the spacer element (8) is configured as a nonwoven and has a surface weight of approx. 40 to 150 g/m², preferably approx. 50 to 150 g/m² in accordance with DIN EN 29073-1.

2. Multi-layer composite body as claimed in claim 1, **characterized in that** the spacer element (8) is connected to the base panel (1) by a material bond.

3. Multi-layer composite body according to any one of the preceding claims, **characterized in that** the surface thereof comprises:
a) a gloss of at least 80, preferably at least 85 UB, measured according to EN 13722 at a measuring angle of 60°,
b) a veil of at most 50, preferably at most 25, measured in accordance with ISO 13803 at a measuring angle of 60°.

4. Multi-layer composite body according to any one of the preceding claims, **characterized in that** the surface thereof comprises:
a) a long wave value, measured as described in the description, of at most 3, preferably at most 2.5, and
b) a short wave value, measured as described in the description, of at most 3, preferably at most 2.5.

5. Multi-layer composite body according to any one of the preceding claims, **characterized in that** the spacer element (8) has a thickness of approximately 0.05 to 2.0 mm, preferably 0.06 to 1.5 mm in accordance with DIN ISO 9073-2.

6. Multi-layer composite body according to any one of the preceding claims, **characterized in that** the spacer element (8) made of polymeric material is selected from the group of polyesters, such as polyethylene terephthalate, polybutylene terephthalate; polyolefins, such as polypropylene, polyethylene; polyamides; aramides as well as mixtures thereof.

7. Multi-layer composite body according to any one of the preceding claims, **characterized in that** the spacer element (8) is configured as a needle-punched nonwoven, in which the individual fibers are mechanically entangled and/or knitted together, and has an (longitudinal) elongation of approx. 50-70% and an (transverse) elongation of approx. 50-70% in accordance with DIN EN 29073-3.

8. Multi-layer composite body according to any one of the preceding claims, **characterized in that** the spacer element (8) is produced as a wet-laid nonwoven, in which the individual fibers are entangled with one another by a consolidation process, and has an (longitudinal) elongation of approx. 5 - 35% and an (transverse) elongation of approx. 5 - 35% in accordance with DIN EN 29073-3.

9. Multi-layer composite body according to any one of the preceding claims, **characterized in that**
- the base panel (1), the polimeric laminate (2) and the spacer element (8) are connected to one another by at least one bonding layer (9),
- the bonding layer (9) has at least one polyurethane (PUR)-based reactive hotmelt adhesive in an application quantity of approx. 30 to 150 g/m², preferably 40 to 80 g/m².

10. Multi-layer composite body according to any one of the preceding claims, **characterized in that** at least the top layer (3) of the polimeric laminate (2), facing away from the base panel (1), is configured to be transparent or translucent.

11. Multi-layer composite body according to one of the preceding claims, **characterized in that** the top layer (3) of the polimeric laminate (2) has, over its thickness, a transmission factor for visible light of at least 80% measured in accordance with ISO 13468-2.

12. Multi-layer composite body according to any one of the preceding claims, **characterized in that** the top layer (3) of the polimeric laminate (2) comprises at least one coating layer (6) with a thickness of approx. 2 to 60 µm, preferably 5 to 30 µm.

13. Multi-layer composite body according to any one of the preceding claims, **characterized in that** the base panel (1) and the polimeric laminate (2) are provided at the edge with at least one lipping (10), which covers both the base panel (1) and the polimeric laminate (2) at the edge.

## Revendications

1. Corps composite multicouche comportant
- un panneau de base (1), qui est de préférence réalisé sous la forme d'un panneau de fibres dur ou d'un panneau de fibres à densité moyenne,
- un stratifié polymère (2), présentant de préférence au moins une couche (3, 4, 5), appliqué sur le panneau de base (1),
- au moins une couche de liaison (9) entre le panneau de base (1) et le stratifié polymère (2),
- dans lequel le panneau de base (1) présente, sur le côté disposé à l'opposé de la couche inférieure (4, 5) du stratifié polymère (2), au moins en partie un élément d'écartement (8) reliés à celui-ci par le biais d'au moins une couche de liaison (9), **caractérisé en ce que** l'élément d'écartement (8) est réalisé sous la forme d'un nontissé et présente une masse surfacique d'environ 40 à 150 g/m², de préférence environ 50 à 150 g/m² selon DIN EN 29073-1.

2. Corps composite multicouche selon la revendication 1, **caractérisé en ce que** l'élément d'écartement (8) est relié au panneau de base (1) par liaison de matière.

3. Corps composite multicouche selon l'une des revendications précédentes, **caractérisé en ce que** sa surface présente :
a) une brillance d'au moins 80, de préférence au moins 85 UB, mesurée selon EN 13722 sous un angle de mesure de 60°
b) un voile de 50 au maximum, de préférence 25 au maximum, mesuré selon ISO 13803 sous un angle de mesure de 60°.

4. Corps composite multicouche selon l'une des revendications précédentes, **caractérisé en ce que** sa surface présente :
a) une valeur d'ondes longues, mesurée comme décrit dans la description, de 3 au maximum, de préférence 2,5 au maximum et
b) une valeur d'ondes courtes, mesurée comme décrit dans la description, de 3 au maximum, de préférence 2,5 au maximum.

5. Corps composite multicouche selon l'une des revendications précédentes, **caractérisé en ce que** l'élément d'écartement (8) présente une épaisseur d'environ 0,05 à 2,0 mm, de préférence 0,06 à 1,5 mm selon DIN ISO 9073-2.

6. Corps composite multicouche selon l'une des revendications précédentes, **caractérisé en ce que** l'élément d'écartement (8) en matériau polymère est sélectionné dans le groupe des polyesters, tels que le polytéréphtalate d'éthylène, le polytéréphtalate de butylène ; des polyoléfines, telles que le polypropylène, le polyéthylène ; des polyamides ; des aramides ainsi que des mélanges de ceux-ci.

7. Corps composite multicouche selon l'une des revendications précédentes, **caractérisé en ce que** l'élément d'écartement (8) est réalisé sous la forme d'un nontissé aiguilleté, pour lequel les différentes fibres sont enchevêtrées et/ou maillées entre elles par un procédé de consolidation mécanique, et présente un allongement (longitudinal) d'environ 50 à 70 % ainsi qu'un allongement (transversal) d'environ 50 à 70 % selon DIN EN 29073-3.

8. Corps composite multicouche selon l'une des revendications précédentes, **caractérisé en ce que** l'élément d'écartement (8) est réalisé sous la forme de nontissé obtenu par voie humide, pour lequel les différentes fibres sont enchevêtrées entre elles par un procédé de consolidation, et présente un allongement (longitudinal) d'environ 5 à 35 % ainsi qu'un allongement (transversal) d'environ 5 à 35 % selon DIN EN 29073-3.

9. Corps composite multicouche selon l'une des revendications précédentes, **caractérisé en ce que**
- le panneau de base (1), le stratifié polymère (2), ainsi que l'élément d'écartement (8) sont reliés les uns aux autres par liaison de matière par le biais d'au moins une couche de liaison (9),
- dans lequel la couche de liaison (9) présente au moins un adhésif fusible réactif à base de polyuréthane (PUR) avec une quantité appliquée d'environ 30 à 150 g/m², de préférence 40 à 80 g/m².

10. Corps composite multicouche selon l'une des revendications précédentes, **caractérisé en ce qu'**au moins la couche (3) supérieure du stratifié polymère (2), orientée dans la direction opposée au panneau de base (1), est réalisée transparente ou translucide.

11. Corps composite multicouche selon l'une des revendications précédentes, **caractérisé en ce que** la couche supérieure (3) du stratifié polymère (2) présente, sur son épaisseur, un facteur de transmission pour la lumière visible d'au moins 80 % mesuré selon ISO 13468-2.

12. Corps composite multicouche selon l'une des revendications précédentes, **caractérisé en ce que** la couche supérieure (3) du stratifié polymère (2) présente au moins une couche de revêtement (6) ayant une épaisseur d'environ 2 à 60 µm, de préférence 5 à 30 µm.

13. Corps composite multicouche selon l'une des revendications précédentes, **caractérisé en ce que** le panneau de base (1), le stratifié polymère (2) sont pourvus, sur le bord, d'au moins une alèse (10), qui recouvre sur le bord aussi bien le panneau de base (1) que le stratifié polymère (2).
